# EUROPÄISCHE PATENTSCHRIFT

(11) **EP 3 426 482 B1**
(45) Veröffentlichungstag und Bekanntmachung des Hinweises auf die Patenterteilung: **07.09.2022**
(21) Anmeldenummer: 16738122.7
(22) Anmeldetag: 08.07.2016
(51) Int. Cl.: B32B 7/04, F16B 1/00, F16B 5/00, F16B 11/00, F16B 43/00

(54) **FOLIENVERBINDUNG VON ZWISCHENLAGEN**
JOINING FILMS/FOILS OF INTERMEDIATE LAYERS
LIAISON DE FEUILLES DE CALES D'ÉPAISSEUR

(30) Priorität: 07.03.2016 DE 102016203691
(43) Veröffentlichungstag der Anmeldung: 16.01.2019
(73) Patentinhaber: Georg Martin GmbH, 63128 Dietzenbach (DE)
(72) Erfinder: MARTIN, Christoph, 63128 Dietzenbach (DE); VÖGELE, Daniel, 63741 Aschaffenburg (DE)
(74) Vertreter: dompatent von Kreisler Selting Werner - Partnerschaft von Patent- und Rechtsanwälten mbB
(86) Internationale Anmeldenummer: PCT/EP2016/066284
(87) Internationale Veröffentlichungsnummer: WO 2017/153007

(56) Entgegenhaltungen:
- DE-U1-202012 010 418

## Beschreibung

Die vorliegende Erfindung betrifft im Allgemeinen Toleranzausgleich-Schichtfolien (Zwischenlagen) als Einstellelemente für mechanische Konstruktionen.

Im Einzelnen betrifft die Erfindung in einer ersten Ausgestaltung Toleranzausgleich-Schichtfolien, bei denen die Folien (Distanzscheiben) durch Verschweißen insbesondere der Seitenflächen miteinander verbunden sind.

Bei Toleranzausgleich-Schichtfolien handelt es sich erfindungsgemäß um Produkte zum Unterlegen bei Maschinen mit dem Zweck eines Toleranzausgleichs (engl. shims).

Es sind hier Produkte zum Unterlegen gemeint, die eine Fertigungstoleranz von mechanischen Komponenten ausgleichen und die Funktion der Spieleinstellung bei der Montage von mechanischen Bauteilen vereinfachen sollen. Werden diese Toleranzen nicht ausgeglichen, kommt es beispielsweise zu höherem Verschleiß. Durch den Einsatz von Toleranzausgleich-Schichtfolien erübrigt sich eine maschinelle (Nach-) Bearbeitung, beispielsweise durch das Nachdrehen des Anschraubflanschs oder nachträgliches Schleifen einer Distanzscheibe. Aus diesem Grund werden Toleranzausgleich-Schichtfolien in vielen Industriebereichen eingesetzt, insbesondere in der Luft- und Raumfahrt sowie bei Großmaschinen (zum Beispiel als Motorunterlagen oder Kugellagerpassringe).

Es haben sich in der Industrie drei beziehungsweise vier Varianten mit unterschiedlichen Vorteilen herauskristallisiert. Sie unterscheiden sich neben Herstellungsart und verwendeten Werkstoffen auch durch ihre Anwendungsmöglichkeiten: Am herkömmlichsten sind dabei solide beziehungsweise massive Toleranzausgleich-Schichtfolien, die aus einer einzigen Lage bestehen und untereinander kombiniert werden können, um durch addieren verschiedener massiver Toleranzausgleich-Schichtfolien einen Toleranzausgleich herzustellen. Darüber hinausgibt es Zwischenlagenkonzepte, die statt durch Addieren weiterer Toleranzausgleich-Schichtfolien durch ein Entfernen bereits vorhandener Bleche beziehungsweise Folien (zum Beispiel durch Abziehen oder Abschälen überflüssiger Bleche) den notwendigen Toleranzausgleich herstellen:
Am üblichsten ist die Verwendung massiver Toleranzausgleich-Schichtfolien, die in der Regel aus einer einzigen Lage bestehen. Der Vorteil dieser Toleranzausgleich-Schichtfolien im Vergleich zu paketierten oder laminierten Toleranzausgleich-Schichtfolien besteht vor allem in ihrer kostengünstigen Herstellung, da mit der metallischen Verarbeitung des Blechs, das heißt des Zuschneidens des Halbzeugs, der Produktionsprozess beendet ist. In Sonderfällen werden massive Toleranzausgleich-Schichtfolien in beliebigen und meist kleinen Dickenstufungen und mit geringen Dickentoleranzen, in der Regel durch Schleifen, hergestellt: Zum Beispiel 1,00 mm / 1,03 mm / 1,06 mm usw. Werden diese zusammen vertrieben, können sie als Sortiment genutzt werden. Es gibt allerdings auch Präzisionsfolien mit einer Dicke von einem oder mehreren Hundertstel Millimetern.

Bei paketierten Toleranzausgleich-Schichtfolien des Standes der Technik werden einzelne Folien durch Verklebung an den Stirnseiten miteinander verbunden. Zum Beispiel im Sinne von Buchrücken oder Abreißkalendern, gegebenenfalls auch mit umlaufenden Klebekanten. Im Vergleich zu den massiven beziehungsweise soliden Toleranzausgleich-Schichtfolien werden mehrere Folien gebündelt oder geklebt und ergeben somit ein Paket; Es muss daher nicht eine solide Zwischenlage passgenau für den Einzelfall hergestellt werden, sondern die Dicke der Zwischenlage kann vor Ort auf die vorhandene Differenz abgestimmt werden. Es können also mehrere Folien an einem Rand durch ein bestimmtes Klebemittel an einer oder mehreren Stellen miteinander verklebt und anschließend durch das Abreißen nicht benötigter Folien passgenau an die nötige Dicke angepasst werden. Paketierte Toleranzausgleich-Schichtfolien kombinieren auch Pakete mit Blechen oder Folien aus unterschiedlichen Materialien und Dicken. Dieses Verfahren ist zwar aufgrund der Verklebung hinsichtlich des Herstellungsprozesses aufwendiger, bietet aber bei der Anwendung den Vorteil, dass die Toleranzausgleich-SchichtfolienPakete vor Ort durch einfaches Abreißen der Folien an die nötige Toleranz angepasst werden können.

Im Unterschied zu paketierten Toleranzausgleich-Schichtfolien werden laminierte Toleranzausgleich-Schichtfolien mit speziellen Klebstoffen vollständig verleimt. Es ergibt sich eine mehrschichtige, vollflächig laminierte so genannte "Sandwichstruktur". Die Verklebung erlaubt ein Ablösen einzelner oder mehrerer Lagen, ohne den restlichen Teil der Zwischenlage zu zerstören oder gar in seiner Funktion zu beeinträchtigen. Bei laminierten Schälblechen handelt es sich um hochpräzise Toleranzausgleich-Schichtfolien. Im Gegensatz zu paketierten oder massiven beziehungsweise soliden Toleranzausgleich-Schichtfolien werden diese Toleranzausgleich-Schichtfolien als scheinbar massive Toleranzausgleich-Schichtfolien nach Kundenzeichnung maßgeschneidert hergestellt und mit den nötigen Bohrungen versehen, sodass sie einbaufertig sind. Entgegen ihrem massiven Aussehen - und anders als herkömmliche Passscheiben - bestehen sie aus einer Vielzahl geklebter Einzelfolien von wenigen hundertstel Millimetern Dicke (0,2 mm bis 0,010 mm), können aber auch mit massiven Folien kombiniert verklebt werden. Der Monteur oder Instandhalter kann die Folienlagen bis auf die ausgemessene Dicke per Hand oder mit einem Werkzeug abziehen.

Sogenannte nichtmetallische schälbare Toleranzausgleich-Schichtfolien, oft basierend auf dem Polyethylenterephthalat (PET), die aus mehreren, von 0,025 mm bis 0,50 mm dicken laminierten Kunststoff-Folien bestehen. Die bereits abgeschälten Kunststoff-Folien lassen sich auch wiederverwenden.

Kunststoff-Toleranzausgleich-Schichtfolien eignen sich besonders für Leichtbau-Konstruktionen, bei denen Korrosion sowie elektrische Isolation von Bedeutung ist, wie beispielsweise in Fahrzeugbau, Luftfahrt sowie Elektro- und Messtechnik, aber auch der Generatoren- und Transformatorenbau, da das laminierte Schichtblech aus Kunststoff dort neben Toleranzausgleich auch die Isolationsfunktion übernehmen kann. Die laminierten Kunststoff-Toleranzausaleich-Schichtfolien weisen jedoch geringere mechanische Festigkeiten als die metallischen Varianten auf.

Als Ausgangsmaterial dienen für die Herstellung von Toleranzausgleich-Schichtfolien im Wesentlichen metallische Präzisionsbänder und Präzisionsmetallfolien aus rostfreiem Stahl, unlegiertem Stahl, Messing und/oder Aluminium, aber auch PET und gegebenenfalls Verbundwerkstoff. Solide Toleranzausgleich-Schichtfolien können generell aus allen denkbaren Halbzeugen hergestellt werden, die sich für den Toleranzausgleich aufgrund ihrer Materialeigenschaften eignen. (Wikipedia, DE, Stichwort: "Zwischenlagen", Aufruf 18.02.2016).

EP-A-667233 beschreibt abziehbare Einstellelemente, die eine Reihe von Folien (Distanzscheiben) umfasst, zwischen denen jeweils Klebstoffschichten eingefügt sind. Die Flachmaterialbogen (Folien) sind aus Metall oder gegebenenfalls aus Kunststoff.

US-A-4526641 beschreibt eine Toleranzausgleich-Zwischenlage, die aus einer Schichtung von wärmeaushärtenden Distanzscheiben besteht, die mittels eines Klebstoffs gleicher Beschaffenheit miteinander verbunden sind und die durch eine gewisse intralaminare Kohäsionskraft gekennzeichnet sind.

Aus DE 69108628 T2 sind Metalldichtungen, wie Zylinderkopfdichtungen, bekannt, bei denen eine Grundplatte aus Metall mit Ausgleichsscheiben oder ringförmigen Abstandsstücken durch Laserschweißen verbunden sind. Die Verschweißung kann auch direkt vollständig um den Rand erfolgen.

DE 10 2012 018 036 A1 beschreibt Stapel von Batterieeinzelzellen, wobei die einzelnen Zellen in einen Beutel von verschweißten Folien eingebracht sind.

DE 602 08 922 T2 betrifft eine Toleranzausgleich-Zwischenlage mit einstellbarer Dicke durch Abschälen, ein Verfahren zur Herstellung und die Anwendung zur Bildung von Ausgleichsscheiben. Zu diesem Zwecke umfasst das Erzeugnis eine abwechselnde Schichtung von Flachmaterialbögen (Folien) und von Schichten eines Klebstoffs, wobei jeder Flachmaterialbogen einen inneren Widerstand gegen das Zerreißen aufweist und wobei jede Schicht von Klebstoff zwei aneinander angrenzende Flachmaterialbögen der Schichtung mit einer Bindungskraft verbindet, die geringer ist, als der Widerstand der Flachmaterialbögen gegen das Zerreißen, was dazu führt, dass hier der Flachmaterialbogen von der Schichtung gelöst werden kann, ohne dass er zerreißt.

Dem vorgenannten Stand der Technik ist gemeinsam, dass die einzelnen Folien, egal ob diese aus Metall, Polymerfolie, Gewebe oder einem Verbundwerkstoff bestehen, in einem gegebenen System meist die gleiche Dicke aufweisen und teilflächig, vollflächig und/oder randständig miteinander verklebt sind. In der Praxis stellt sich jedoch heraus, dass die Verklebung zwischen den Folien von Nachteil ist, wenn die Zwischenlage beispielsweise zwischen zwei gekrümmten Bauteilen eingesetzt werden. Der Nachteil entsteht dadurch, dass vollflächig laminierte, flache Toleranzausgleich-Schichtfolien, ab dem Übersteigen bestimmter Radii die Tendenz haben zu delaminieren, was aus Spannungen zwischen den Lagen herrührt, was zum Reißen die Kleberlaminierungen führt. Man kann diesen Nachteil umgehen, indem die Aushärtung der Toleranzausgleich-Schichtfolien in Formhälften zustande kommt. Die vollflächige Verklebung ist darüber hinaus beim Abschälen einzelner Distanzscheiben von Nachteil, da hier in der Regel Werkzeug benutzt werden muss. Auch die Buchrückenverklebung hat gewisse Nachteile: bei dem Erfordernis, dass die Zwischenlage Querkräfte aufnehmen muss und das nur bedingt leisten kann; durch die Gefährdung von Fügestellen, die eine hohe Dichtheit aufweisen müssen; durch die mögliche Auflösung des Klebstoffes, der unerwünschte Rückstände in Wälzlager zur Folge haben kann; bei dem Erfordernis, dass bei hohen Temperaturen keine kritische Gase gebildet werden dürfen; bei dem Erfordernis, Folienverbunde für Toleranzausgleich-Schichtfolien herzustellen für Hochtemperaturanwendungen; wenn durch das Entfernen von Schichten vom Toleranzausgleich-Schichtfolien"-buch" Klebstoffreste verbleiben, die einen unschönen Klebstoffgrat bilden, der dann per Klinge entfernt werden müsste.

Die vorgenannte Aufgabe der Erfindung wird in einer ersten Ausführungsform gelöst durch paketierte oder laminierte Toleranzausgleich-Schichtfolien umfassend eine Mehrzahl von Folien gleicher oder verschiedener Art, dadurch gekennzeichnet die Folien miteinander durch eine Schweißverbindung verbunden sind.

Unter "Schweißen" versteht man (gemäß EN 14610 und DIN 1910-100 ebenso wie im Sinne der vorliegenden Erfindung) das unlösbare Verbinden von Bauteilen und Anwendung von Wärme und/oder Druck, mit oder ohne Schweißzusatzwerkstoffe, wobei erfindungsgemäß Zusatzstoffe eher nicht eingesetzt werden.

Die nötige Schweißenergie wird erfindungsgemäß von außen zugeführt, wobei Schweißhilfsstoffe wie Schutzgase, Schweißpulver oder Pasten das Schweißen erleichtern können oder auch erst möglich machen. Das Schweißen auch im Sinne der vorliegenden Erfindung erfolgt durch Wärmezufuhr bis zum Schmelzen des Werkstoffes oder durch Wärmezufuhr und zusätzliche Krafteinwirkung (Druck) auf den Stapel der Folien. Somit werden die Folien im Randbereich der Toleranzausgleich-Schichtfolien durch die Schweißverbindung miteinander verbunden. Im Gegensatz zur Buchrückenverklebung wird hier jedoch kein separater Kleber aufgebracht, sondern die Folien durch Verschmelzen miteinander verbunden.

Besonders bevorzugt im Sinne der vorliegenden Verbindung wird die Schweißverbindung durch Laserschweißen hergestellt, da hier mit hoher Schweißgeschwindigkeit, schmaler und schlanker Schweißnahtform und mit geringem thermischen Verzug gefügt werden kann. Bekanntermaßen wird das Laserschweißen oder Laserstrahlschweißen in der Regel ohne Zuführung eines Zusatzwerkstoffes ausgeführt. Die Laserstrahlung wird mittels einer Optik fokussiert, wobei der Laserstrahl einen typischen Durchmesser im Bereich von wenigen Zehntelmillimetern aufweist, wodurch sehr hohe Energiekonzentrationen entstehen, wenn der eingesetzte Laser die typischen Leistungen von einigen Kilowatt Laserleistung besitzen. Dementsprechend ist es erfindungsgemäß möglich, mehrere Folien durch eine äußerst dünne Schweißnaht an wenigstens einem äußeren Rand des Stapels der Folien durch eine Schweißverbindung miteinander zu verbinden. Hierbei kann eine oder mehrere Schweißlinien an wenigstens einem Rand vorhanden sein, wobei darüber hinaus auch eine Mehrzahl von Schweißlinien an wenigstens einem Rand beziehungsweise einer Randfläche vorhanden sein können. Damit wird eine stabile Verbindung der einzelnen Folien erreicht, sodass diese in einfacher Form abschälbar sind.

Neben der erfindungsgemäßen Schweißverbindung der einzelnen Folien ist es selbstverständlich auch möglich, die Folien, die aus gleichem oder unterschiedlichem Material und/oder unterschiedlichen Dicken bestehen können auch teilflächig, vollflächig und/oder randständig zusätzlich zu verkleben.

Als Material für die Folien der Toleranzausgleich-Schichtfolien können beliebige Folien eingesetzt werden, sofern diese schweißbar sind. Darunter versteht man, dass durch das Zusammenwirken der Eignung des Werkstoffes zum Schweißen (Schweißneigung) einer schweißgeeigneten Konstruktion (Schweißsicherheit) und einer geeigneten Fertigungsorganisation (Schweißmöglichkeit) Einzelteile zu Bauteilen mit gewünschter Qualität zusammengeschweißt werden können. Dementsprechend sind im Sinne der vorliegenden Erfindung besonders bevorzugt Metallfolien, Polymerfolien, Gewebe, Faserverbundwerkstoffe insbesondere aus Glas-, Kohlenstoff-, Keramik- oder Aramidfasern oder Mischungen der vorgenannten Materialen.

Eine weitere Ausführungsform der vorliegenden Erfindung besteht in einem Verfahren zur Herstellung der oben definierten paketierten oder laminierten Toleranzausgleich-Schichtfolien. Dieses erfindungsgemäße Verfahren ist dadurch gekennzeichnet, dass man zunächst paketierte oder laminierte Toleranzausgleich-Schichtfolien umfassend eine Mehrzahl von Folien gleicher oder verschiedener Art durch eine Schweißverbindung verbindet.

Während also die ersten Schritte der Herstellung der erfindungsgemäßen Toleranzausgleich-Schichtfolien denen des Standes der Technik entsprechen, werden diese nach dem Stapeln der einzelnen Folien wenigstens an einer Seite oder Kante miteinander verschweißt. Dementsprechend ist es erfindungsgemäß möglich, nicht nur quaderförmige oder würfelförmige Toleranzausgleich-Schichtfolien miteinander zu verschweißen, sondern auch treppenförmig gestapelte Folien zu verschweißen, bei denen auch ein Teil der "Trittstufe" mit der "Setzstufe" der nächsten Folien verbunden wird.

Besonders bevorzugt im Sinne der vorliegenden Erfindung verwendet man zum Verschweißen der Flächen und/oder Kanten eine Strahlungsquelle, insbesondere eine Laserstrahlungsquelle.

Eine weitere Ausführungsform der vorliegenden Erfindung besteht in der Verwendung der Toleranzausgleich-Schichtfolien beispielsweise im Fahrzeugbau, in der Luftfahrttechnik, in der Elektrotechnik oder der Messtechnik, insbesondere im Generatorenbau oder im Tansformatorenbau.

Hierbei ist es auch möglich, die oben definierten Toleranzausgleich-Schichtfolien zur elektrischen Isolation einzusetzen.

Die erfindungsgemäße Zwischenlage ist eine zeit- und kostenoptimierte Alternative zu bekannten Toleranzausgleich-Schichtfolien.

In einer bevorzugten Ausführungsform der vorliegenden Erfindung ist es möglich, eine lose oder komprimierte Schichtung von Folien randseitig mit einer Strahlungsquelle zu behandeln.

Damit werden die Toleranzausgleich-Schichtfolien mit nur in Teilbereichen der Folien miteinander verbunden, wobei dies nur am Umfang, also den Stirnflächen der Folie, erfolgt. Bei einer treppenförmigen Ausgestaltung der Zwischenlage wird gegebenenfalls auch die "Treppenstufe" angeschmolzen, was jedoch im Regelfall nicht störend ist.

Diese Art der erfindungsgemäßen Verbindung ermöglicht eine flexible Radiengestaltung für kurvige Oberflächen, sofern in Applikationen zwei gekrümmte Flächen auf Abstand gehalten werden müssen. Ebenso können unterschiedliche Materialarten verbunden werden mit unterschiedlichsten vorteilhaften Eigenschaften für die Anwendung, als da wären: Vermeidung von Kontaktkorrosion, Einbringen von Gleitschichten, Integrieren von dickeren Zwischenmaterialbögen, die Steifigkeit und höhere Druckfestigkeiten einbringen und Kostenvorteile bieten, indem die Anzahl von Schichten verringert wird. Die erfindungsgemäßen Zwischenlager schmiegen sich besonders gut an gekrümmte Oberflächen, insbesondere wenn keine flächenmäßige Verbindung der Folien vorhanden ist.

Besonders bevorzugt werden daher die einzelnen Folien in der Form des Endprodukts wie aus dem Stand der Technik bekannt, ausgeschnitten oder ausgestanzt, um diese exakt übereinander zu stapeln. Anschließend werden die Lagen fixiert um dann die vorher definierte(n) Stirnfläche(n)/umlaufende(n) Kante(n) behandelt. Die Verbindung sollte elastisch genug sein, um mechanische Festigkeit bei geringer Benutzungsfläche zu bieten und den Erschütterungen durch Handhabung und Transport zu widerstehen.

## Patentansprüche

1. Paketierte oder laminierte Toleranzausgleich-Schichtfolien (Zwischenlagen) umfassend eine Mehrzahl von Folien gleicher oder verschiedener Art, **dadurch gekennzeichnet** die Folien miteinander durch eine Schweißverbindung verbunden sind.

2. Toleranzausgleich-Schichtfolien nach Anspruch 1, **dadurch gekennzeichnet, dass** mehrere Folien an wenigstens einem Rand durch eine Schweißverbindung an einer oder mehreren Stellen miteinander verbunden sind.

3. Toleranzausgleich-Schichtfolien nach Anspruch 1 oder 2, **dadurch gekennzeichnet, dass** die Folien durch wenigstens eine Schweißlinie an wenigstens einem Rand verbunden sind.

4. Toleranzausaleich-Schichtfolien nach Anspruch 1 oder 2, **dadurch gekennzeichnet, dass** die Folien durch eine Mehrzahl von Schweißlinien an wenigstens einem Rand verbunden sind.

5. Toleranzausgleich-Schichtfolien nach einem der Ansprüche 1 bis 4, **dadurch gekennzeichnet, dass** die Folien weiterhin teilflächig, vollflächig und/oder randständig verklebt sind.

6. Toleranzausgleich-Schichtfolien nach einem der Ansprüche 1 bis 5, **dadurch gekennzeichnet, dass** die Folien Metallfolien, Polymerfolien, Gewebe, Faserverbundwerkstoffe insbesondere aus Glas, Kohlenstoff-, Keramik- oder Aramidfasern oder Mischungen der vorgenannten Materialen umfassen.

7. Verfahren zur Herstellung von paketierten oder laminierten Toleranzausgleich-Schichtfolien (Zwischenlagen) nach einem der Ansprüche 1 bis 6, **dadurch gekennzeichnet, dass** man zunächst einzelnen Folien in der Form des Endprodukts ausschneidet oder ausstanzt, diese exakt übereinander oder treppenförmig stapelt, die Lagen fixiert und anschließend dann vorher eine oder mehrere definierte Stirnfläche(n)/umlaufende Kante(n) verschweißt.

8. Verfahren nach Anspruch 7, **dadurch gekennzeichnet, dass** man die Flächen und/oder Kanten mit einer Strahlungsquelle, insbesondere einer Laserstrahlungsquelle verschweißt.

9. Verwendung von Toleranzausgleich-Schichtfolien(Zwischenlagen) nach einem der Ansprüche 1 bis 6 oder erhalten nach einem Verfahren der Ansprüche 7 oder 8 im Fahrzeugbau, in der Luftfahrttechnik, in der Elektrotechnik oder der Messtechnik, insbesondere im Generatorenbau oder im Transformatorenbau.

10. Verwendung nach Anspruch 9 zur elektrischen Isolation.

## Claims

1. Edge-bonded or laminated tolerance compensation layer sheets (shims) comprising a plurality of sheets of the same or different kinds, **characterized in that** the sheets are bonded to one another by welding.

2. Tolerance compensation layer sheets according to claim 1, **characterized in that** several sheets are bonded together on at least one edge on one or several sites by welding.

3. Tolerance compensation layer sheets according to claim 1, **characterized in that** the sheets are bonded together on at least one edge by at least one weld line.

4. Tolerance compensation layer sheets according to claim 1 or 2, **characterized in that** the sheets are bonded together on at least one edge by a plurality of weld lines.

5. Tolerance compensation layer sheets according to any of claims 1 to 4, **characterized in that** the sheets are further bonded together with an adhesive on part of the area, the full area, and/or peripherally.

6. Tolerance compensation layer sheets according to any of claims 1 to 5, **characterized in that** the sheets include metal foils, polymer sheets, fabrics, fiber composite materials, especially of glass, carbon, ceramic or aramid fibers, or mixtures of the above mentioned materials.

7. A process for preparing edge-bonded or laminated tolerance compensation layer sheets (shims) according to any of claims 1 to 6, **characterized in that** individual sheets are cut or punched out at first in the form of the end product, these are stacked exactly on one another or in the form of a staircase, the layers are fixed, and subsequently then previously one or more defined front surfaces/circumferential edges are welded together.

8. The process according to claim 7, **characterized in that** the areas and/or edges are welded together using a radiation source, especially a laser radiation source.

9. Use of tolerance compensation layer sheets (shims) according to any of claims 1 to 6 or obtained by a process of claims 7 or 8 in automotive construction, aeronautical engineering, electrical engineering, or metrology, especially in generator construction or in transformer construction.

10. The use according to claim 9 for electrical insulation.

## Revendications

1. Feuilles stratifiées de compensation de tolérance (cales) séparables ou pelables, comprenant une pluralité de feuilles d'un type identique ou différent, **caractérisées en ce que** lesdites feuilles sont reliées entre elles par une liaison soudée.

2. Feuilles stratifiées de compensation de tolérance selon la revendication 1, **caractérisées en ce que** plusieurs feuilles sont reliées entre elles par une liaison soudée sur au moins un bord en un ou plusieurs points.

3. Feuilles stratifiées de compensation de tolérance selon la revendication 1 ou 2, **caractérisées en ce que** les feuilles sont reliées entre elles par une ligne de soudage sur au moins un bord.

4. Feuilles stratifiées de compensation de tolérance selon la revendication 1 ou 2, **caractérisées en ce que** les feuilles sont reliées entre elles par une pluralité de lignes de soudage sur au moins un bord.

5. Feuilles stratifiées de compensation de tolérance selon l'une quelconque des revendications 1 à 4, **caractérisées en ce que** les feuilles sont en outre collées sur une surface partielle, sur la surface entière et/ou dans des zones marginales.

6. Feuilles stratifiées de compensation de tolérance selon l'une quelconque des revendications 1 à 5, **caractérisées en ce que** lesdites feuilles incluent des feuilles métalliques, des feuilles de polymère, des tissus, des composites en fibres, notamment en fibres de verre, de carbone, de céramique ou d'aramide, ou des mélanges des matériaux précités.

7. Procédé pour préparer des feuilles stratifiées de compensation de tolérance séparables ou pelables selon l'une quelconque des revendications 1 à 6, **caractérisé en ce que** d'abord des feuilles individuelles sont coupées ou poinçonnées dans la forme du produit final, empilées exactement l'une sur l'autre ou en forme d'escalier, les couches sont fixées, et ensuite une ou plusieurs surfaces frontales/bords circonférentiels préalablement définis sont soudés ensemble.

8. Procédé selon la revendication 7, **caractérisé en ce que** les surfaces et/ou les bords sont soudés ensemble au moyen d'une source de radiation, notamment une source de radiation laser.

9. Utilisation de feuilles stratifiées de compensation de tolérance selon l'une quelconque des revendications 1 à 6, ou obtenues par un procédé selon la revendication 7 ou 8, dans la construction automobile, dans l'aéronautique, dans le génie électrique, ou dans la mesure, notamment dans la construction de générateurs ou dans la construction de transformateurs.

10. Utilisation selon la revendication 9 pour l'isolation électrique.
